# EUROPEAN PATENT SPECIFICATION

(11) **EP 2 519 414 B1**
(45) Date of publication and mention of the grant of the patent: **30.11.2016**
(21) Application number: 10812799.4
(22) Date of filing: 23.12.2010
(51) Int. Cl.: B60C 11/11

(54) **PNEUMATIC TIRE FOR ON ROAD AND OFF ROAD USE**
LUFTREIFEN ZUR VERWENDUNG AUF STRASSEN UND IM GELÄNDE
PNEUMATIQUE POUR UNE UTILISATION SUR ROUTE ET HORS ROUTE

(30) Priority: 29.03.2010 US 318691 P; 28.12.2009 IT RM20090687
(43) Date of publication of application: 07.11.2012
(73) Proprietor: Pirelli Tyre S.p.A., 20126 Milano (IT)
(72) Inventor: COLOMBO, Gianfranco, I-20126 Milan (IT); MONTESELLO, Stefano, I-20126 Milan (IT); MACHADO, Kaio, CEP-09111-340 Santo André, SP (BR)
(74) Representative: Fiammenghi, Eva
(86) International application number: PCT/IB2010/003340
(87) International publication number: WO 2011/080565

(56) References cited:
- EP-A1- 1 759 890
- WO-A1-99/52720

## Description

The present invention relates to a motor vehicle tyre. In particular, the invention relates to a tyre for motor vehicles having large engine capacity, e.g. 2000-3000 cm³, whose tread provides excellent performances when driving both on road and off road.

Generally, tyres for off-road vehicles are designed (tread band, structure and profile) for driving particularly on extreme or in any case non-asphalted terrains, for example for driving on rough grounds, dirt roads or muddy and/or sandy grounds.

In recent years, the so-called "all terrain" vehicles (four-wheel drive, shortly 4x4), i.e. vehicles combining performances on off-road terrains and on road, have become increasingly popular and their flexibility has been largely appreciated by the market.

Amongst the "all terrain" are regarded vehicles such as PICK-UPs, but also SUVs (Sport Utility Vehicles) which combine features of spaciousness typical of the station wagons with high performances (especially in terms of high torque and speed) typical of the sport vehicles when driving on roads.

The drivers of this kind of vehicles are indeed increasingly demanding tyres which can provide excellent performances both on off-road and road paths, and at the same time good handling features, low noise level and good mileage.

However, the achievement of the above-mentioned requirements is reciprocally conflicting.

US2003/0041939 describes a tyre having a tread band for both on-road and off-road use: the tread band has at least a pair of intermediate ribs and a pair of shoulder ribs providing a plurality of projecting lug groups. The projecting lug groups are formed on and extend outwardly from and along the sidewalls of the tyre. Each projecting lug group preferably comprises three separate lugs. Each lug substantially has a flat outer surface lying in a different plane than the outer surface of the other lugs. Two of the lugs are radially aligned with each other along the sidewall of the tyre and the third lug lies in a intermediate position between the two aligned lugs. EP1759890 describes a pneumatic tire including a column of center blocks partitioned, on a tread center region, by circumferential thin grooves formed along a tire circumferential direction and crosswise thin grooves formed along a tire width direction, and columns of shoulder blocks partitioned by the circumferential thin grooves and main rag grooves on shoulder portions. Each of the center blocks includes one or more sub-thin grooves, each of which has a length of 100 to 180%.

WO99/52720, corresponding with the features of the preamble of claim 1, discloses a tyre with central blocks subdivided by grooves crossing the central portion of the tyre itself.

US2008/0047642 describes a tyre for light vehicles or cars. The tread band has a plurality of traction elements radially extending outwardly from the base and from a large circumferentially continuous groove. The large groove has a circumferentially continuous window extending from the tread base to the radially outer contact surface. The window, when seen in the footprint area of the tread band, has a trapezoidal shape with two sides and a radially outer large base. The large base has an axial width corresponding to 7% to 20% of the tread width. The large groove has a zig-zagging portion extending radially from the tread base with a continuous circumferential course. The sides of the window define the maximum axial extension or width of the zig-zagging portion of the large groove.

The Applicant has observed that a large number of blocks of considerable dimensions, as in the treads of the prior art, improves the traction especially on wet and/or muddy and/or dirt grounds, however an excessive use of blocks may compromise the performances on dry road grounds and increase the tyre noise level. In fact, one of the main causes of noise is the continuous sequence of impacts of the block edges on the road surface.

The Applicant has further noted a void-to-rubber ratio in the central portion of the tyres for off-road use of the prior art which is higher than in road tyres. This choice is usually due to the need of improving primarily the drainage on wet and/or muddy grounds, and ensuring good flexibility and comfort of such portion. However, the Applicant has noted that an increased void-to-rubber ratio may compromise the performances on dry grounds, as well as increase the tyre noise level and wear, as regards both mileage and wear unevenness.

The Applicant has found that the reciprocally contrasting problems described above are solved by a tread pattern having a low void-to-rubber ratio, and thus a greater amount of rubber to the ground, in the innermost region, near the equatorial plane, and at the same time ensuring the formation in the footprint area of two main drainage channels, one transverse and the other oblique. Such drainage channels completely cross the tread from one shoulder to the other and prevent the retention of water and/or mud when running on muddy and/or wet terrains, at the same time providing traction and lateral holding on sandy and/or grassy grounds.

More particularly, according to a first aspect thereof, the present invention relates to a tyre having a tread comprising a central portion L1 astride an equatorial plane X-X and two shoulder portions L2, L3. The shoulder portions each have at least one row of lateral blocks. The central portion L1 has a void-to-rubber ratio lower than 0,25 and comprises a first and a second row of circumferential central blocks having an elongate shape.

Each block of the first row of circumferential central blocks is axially side by side with a block of the second row such as to define a first substantially transverse drainage channel, substantially continuous, which crosses the central portion L1. Such first transverse drainage channel is defined between a first pair of blocks, formed by a block of the first central row and a block of the second central row arranged axially side by side, and the first circumferentially adjacent pair of blocks, formed in a similar way.

Moreover, each block of the first row of central blocks is arranged according to an extension direction.

Each block of the second row of central blocks extends according to an extension direction substantially aligned with the extension direction of the circumferentially preceding block of the first row, such as to define an inclined and substantially continuous second drainage channel which crosses the central portion L1.

Such second drainage channel is defined between a second pair of blocks, formed by a block of the second row of central blocks and the block of the first row of central blocks which precedes the former in circumferential direction and is aligned thereto according to the substantially common extension direction, and the circumferentially adjacent second pair of blocks, formed in a similar way.

The expression "substantially continuous" referred to the drainage channels may be interpreted as the condition in which, if the walls of two blocks defining the channel and substantially arranged side by side circumferentially are continued, the continuations lie within the channel itself or in any case at least one of such continuations, if not lying within the channel, at most runs into the wall of a circumferentially subsequent block.

In other words, moving in the channel from one shoulder to the other and/or vice-versa, it is never found a wall of a block defining the channel arranged so as to completely obstruct the passage through the channel, thus trapping mud and/or water.

Moreover, the above-mentioned "extension direction" of the blocks of the central rows may generically correspond to the direction along which the larger dimension of the block having elongate shape extends. For practical purposes, in order to identify the extension direction of a block it is possible, for example, to refer to a straight line passing through the mid-points of the short sides of an ideal rectangle inscribing the block.

For the purposes of the present invention, the width of the circumferential and/or transverse grooves may be detected taking the width of the radially outer edges of the grooves themselves as a reference.

For the purposes of the present invention, the following definitions are further applied:
- By "equatorial plane" of the tyre it is meant a plane perpendicular to the rotation axis of the tyre and dividing the tyre into two symmetrically equal portions.
- By "circumferential" direction it is meant a direction generically directed according to the rotation direction of the tyre, or in any case only slightly inclined with respect to the rotation direction of the tyre.
- By "axial direction" or "axially" it is meant a direction parallel to, or in any case only slightly inclined with respect to, the rotation axis of the tyre.
- By "void-to-rubber ratio" it is meant the ratio between the total surface of the recesses of a determined portion of the tread pattern of the tyre (possibly of the whole tread pattern) and the total surface of the determined portion of the tread pattern (possibly of the whole tread pattern).

The present invention, in the above-mentioned aspect, may have at least one of the preferred features hereinafter described.

Preferably, each block of the central portion L1 extends according to an extension direction adapted to form an angle α1 between 45° and 80° to the equatorial plane X-X.

Furthermore, referring to the angular arrangement of the grooves and/or of the straight lines formed in the tread band relative to the equatorial plane of the tyre, such an angular arrangement shall be intended for each point of the groove and/or of the straight line as referred to the angle defined by a complete rotation performed starting from the equatorial plane up to the direction tangent to the straight line passing through such point.

In order to provide the blocks in a particularly stressed region of the tread band with a determined stiffness, the blocks of the central rows may substantially be polygons, and preferably substantially convex polygons.

For the purposes of the present invention, by substantially convex polygon it is meant a polygon in which an extension of any one of its sides substantially never crosses the surface of the polygon itself.

For practical purposes, the above-mentioned blocks of the central rows may also have small recesses (at most of 1-2 mm, or, in percentage, at most of less than 5% of the larger dimension of the block itself), in any case maintaining an adequate stiffness for the purposes of the invention.

Advantageously, the perimeter of the blocks of the central rows may comprise a broken line.

Preferably, each block of the central portion may have six sides.

Suitably, the blocks of the central rows may comprise have at least one portion tapered such as to form a vertex.

Preferably, the blocks of the first central rows have the same shape and dimension as the blocks of the second rows.

Advantageously, the blocks of the first row are arranged rotated by 180° relative to the blocks of the second central row.

In order to provide an optimal balance of the traction/braking behaviour on any kind of surface, the blocks of the first central row are advantageously oriented with the vertex pointing in opposite direction relative to the vertex of the blocks of the second central row. Preferably, at least one first side of a block of the first central row lies in a plane substantially perpendicular to the equatorial plane X-X and is substantially aligned with at least one second side of a block of the second central row for upwardly delimiting the first transverse channel.

Similarly, at least one second side of a block of the first central row lies in a plane substantially perpendicular to the equatorial plane X-X and is substantially axially aligned with at least a first side of a block of the second central row for downwardly delimiting the first transverse channel.

Advantageously, the tyre according to the present invention my comprise two circumferential grooves for separating the central portion L1 from the shoulder portions L2; L3.

Preferably, the circumferential grooves have an undulating course

Preferably, the blocks of the shoulder portions may be circumferentially separated from one another by shoulder transverse grooves.

Suitably, the path of the circumferential grooves may be circumferentially interrupted at least by the shoulder transverse grooves.

The circumferential grooves with undulating course may preferably have a width greater than 6 mm.

Suitably, the circumferential grooves with undulating course may have a width smaller than 15 mm. Advantageously, the circumferential grooves with undulating course may have a depth greater than 12 mm, preferably between 10 and 17 mm.

Preferably, the rows of circumferential central blocks may be separated from each other by a circumferential groove.

Preferably, the said circumferential groove may have a "saw-tooth" course.

In the present invention, by "saw-tooth" course of a groove it is meant the course of a groove having a pattern cyclically repeated and formed by at least one section substantially transverse and perpendicular to the equatorial plane X-X and by at least one section inclined relative to the equatorial plane X-X. The latter being arranged and dimensioned so as to intersect the substantially transverse section preferably at an end thereof.

The circumferential groove may preferably have a width greater than 5 mm.

Suitably, the circumferential groove may have a width smaller than 15 mm. Advantageously, the circumferential groove may have a depth greater than 12 mm, preferably between 10 and 17 mm.

In order to improve the grip to the ground in presence of wet grounds, the rows of central and/or shoulder blocks may have a plurality of sipes.

The sipes may have a depth between 2 and 10 mm, and a width smaller than 2 mm.

Such sipes are able to provide at the same time optimal braking/traction features in any kind of running condition of the tyre on a straight path and/or in a bend.

The tyre of the invention has an excellent running behaviour on road, both on dry and wet grounds, as well as a low noise level in such conditions. Moreover, the tyre of the invention also has excellent off-road handling features, in particular as far as water and/or mud drainage and, at the same time, traction and lateral holding on dirt roads or on sandy/grassy terrains are concerned.

Features and advantages of the invention shall now be presented with reference to embodiments shown for indicating and non limiting purposes in the accompanying drawings, wherein:
- Fig. 1 is a perspective view of a tyre with a tread made according to an example of the invention;
- Fig. 2 is a plan view of the tread of the tyre of Fig. 1;
- Fig. 2a is an enlarged plan view of a variant of the tread of figure 2;
- Fig. 3 is an enlarged cross-sectional view of the tread of the tyre of Fig. 2.

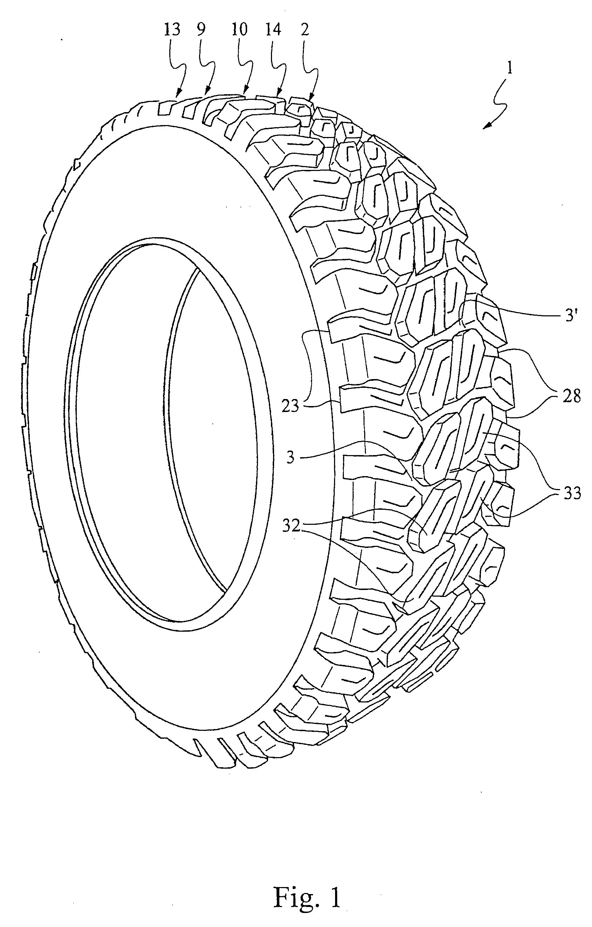

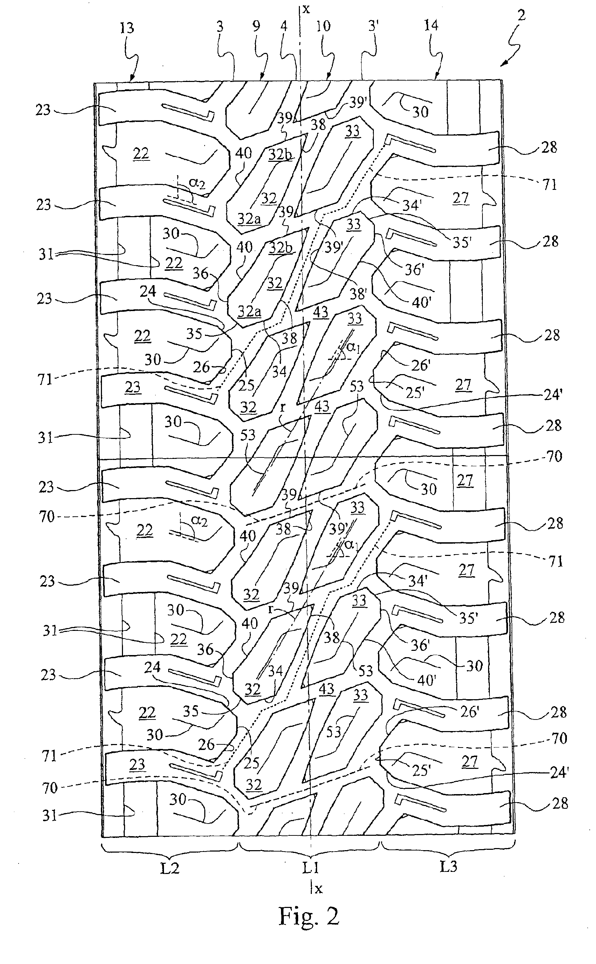

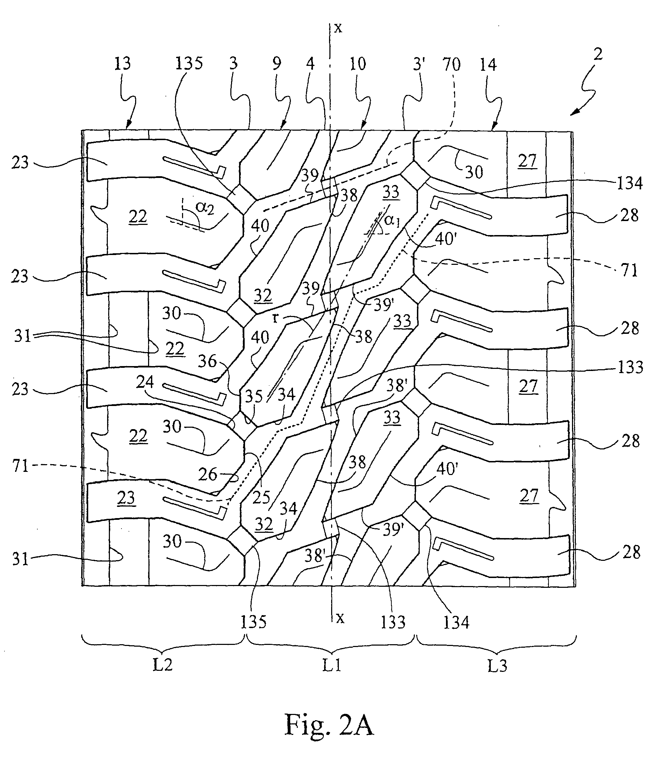

In Figs 1, 2, 2a a tyre 1 is shown with a first embodiment of the tread 2 according to the present invention.

The structure of the tyre 1 is per se of a conventional type and comprises a carcass, a tread band crowning the carcass, a pair of axially opposite sidewalls, ending into beads reinforced with bead rings and respective bead inserts. Preferably, the tyre also comprises a belt structure interposed between the carcass and the tread band. The carcass comprises one or more carcass plies anchored to the bead rings, while the belt structure comprises two belt strips radially arranged one on top of the other. The belt strips are formed by sections of a rubberized fabric incorporating metal cords, which cords are parallel to one another within each strip and have a crossed orientation with respect to those of the adjacent strips, with preferably symmetrical inclinations relative to the equatorial plane. Preferably, the belt structure also comprises a third belt strip, in a radially outermost position, provided with cords oriented substantially parallel to the equatorial plane.

The tyre 1 preferably has a ratio H/C of the height of the right cross section to the maximum width of the cross section between 0,60 and 0,90.

For ensuring a long mileage and, at the same time, high performances during the entire life of the tyre, particularly as far as handling on road grounds is concerned, the tread 2 has globally a void-to-rubber ratio which is low compared to a tyre also intended for off-road use, i.e. less than 0,5, preferably less than 0,47, for example equal to about 0,4.

Preferably, the void-to-rubber ratio is in any case greater than 0,35.

The tread 2 comprises a central portion L1 and two shoulder portions L2; L3.

The tread band 2 shown in figures 1, 2 and 2a is of the symmetrical type, i.e. it does not have a preferred rolling direction and does not involve any restriction as to the tyre fitting side (inner/outer) on the vehicle.

The central portion L1, arranged astride the equatorial plane X-X, is visually separated from the shoulder portions L2; L3 by two circumferential grooves 3, 3'.

According to the present invention, the circumferential grooves 3, 3' are mainly intended for providing the tread 2 with longitudinal flexibility and for ensuring, at the same time, water and mud drainage in the footprint area, on any kind of ground the tyre runs on.

More preferably, the circumferential grooves 3, 3' have an undulating course, as better described below. The undulating course of the grooves 3, 3' increases the lateral stiffness of the tyre, providing greater "handling".

The circumferential grooves 3, 3' with undulating course may preferably have a width greater than 6 mm.

Suitably, the circumferential grooves 3, 3' with undulating course may have a width smaller than 15 mm, Advantageously, the circumferential grooves with undulating course may have a depth greater than 12 mm, preferably between 10 and 17 mm, for example equal to 15 mm.

The central portion L1 has two circumferential rows 9 and 10 of blocks 32, 33, while the shoulder portions each have one row of blocks, respectively 13, 14.

The shoulder portions L2, L3 shall be described first, and only subsequently a detailed description of the central portion L1 shall be presented.

In detail, the shoulder portion L2 has a row 13 of shoulder- blocks 22, separated from one another by shoulder transverse grooves 23.

Preferably, the shoulder transverse grooves 23, at least in a first section thereof, may be arranged according to radial planes of the tyre 1.

The transverse grooves 23 substantially have a constant width and even more preferably a width between 14 mm and 28 mm, for example equal to 22 mm.

Furthermore, the grooves 23 preferably have a depth greater than 12 mm, preferably between 10 mm and 17 mm, for example equal to 15 mm.

According to the embodiment shown in the figures, the shoulder blocks 22 substantially have a rectangular shape. In their axially outermost portion (the portion furthest from the equatorial plane X-X), the shoulder blocks 22 are arranged substantially perpendicularly to the equatorial plane X-X.

Moving further towards the equatorial plane X-X, the shoulder transverse grooves 23, while remaining parallel to one another, are inclined forming an angle α2 to the equatorial plane X-X. Preferably, the shoulder transverse grooves 23 are inclined by an angle α2 to the equatorial X-X which is smaller than 120°. The inclination of the shoulder transverse grooves 23 also determines the inclination of the second section of the shoulder blocks 22. The shoulder blocks 22 end substantially facing the central portion L1, with an axially inner end formed by three sides 24, 25, 26, of which two sides 24, 26 are oblique connection sides, and one side 25 is substantially parallel to the equatorial plane X-X and comprised between the two oblique connection sides 24, 26. Preferably, one of the two oblique connection sides 24, 26, indicated at 24, has a lesser extension.

As to the row 14 of blocks 27 of the shoulder portion L3, it is noted that, apart from the orientation of the axially inner end of the blocks, the row 14 of block 27 is totally similar to the row 13 of the blocks 22 and can be obtained simply by rotating by 180° the latter.

The blocks 27 of the row 14, however, are not arranged in a position circumferentially corresponding to that of the blocks 22 of the row 13, instead they are circumferentially staggered. Also the blocks 27 of the row 14 are separated by shoulder transverse grooves 28 totally similar to the transverse grooves 23 of the row 13.

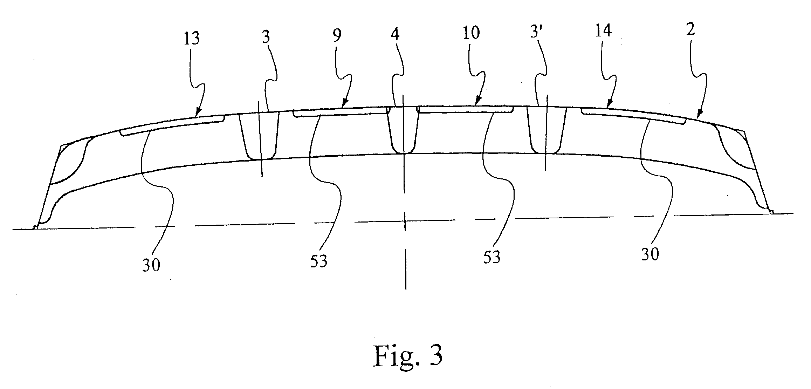

As mentioned above, it is noted that the axially inner ends of the shoulder blocks of the same row are oriented in the same circumferential direction, while, according to what is shown in the embodiments of figures 1-3, the axially inner ends of two distinct rows, in detail rows 13 and 14, are oriented in opposite circumferential direction.

For immediately recognizing the above-mentioned feature in figures 2 and 2a, the ends of the axially inner sides of the blocks 27 bear, apart from a prime, the same reference numeral as the corresponding sides of the axially inner ends of blocks 22.

In detail, considering for example figure 2, while the axially inner ends of the blocks 22, formed by sides 24, 25, 26, are oriented downwardly, the axially inner ends of the blocks 27, formed by sides 24', 25', 26', are oriented upwardly.

Sides 24, 25, 26 and 24', 25', 26' of the ends of the shoulder blocks 22, 27 face and delimit the groove 3, 3'. In other words, the sequence in circumferential direction of the axially inner ends of the blocks 22 and 27, particularly of sides 24, 25, 26 and 24', 25', 26', defines the axially outer lateral wall of the groove 3, respectively 3'.

As mentioned above, preferably the circumferential groove 3 is provided with a substantially undulating path, which means that the lateral walls have a substantially undulating path, which is interrupted by the shoulder transverse grooves 23.

Likewise, as to the groove 3', it can be seen that its undulating path is interrupted by the shoulder transverse blocks 28.

It can be noted that, according to the present invention, the shoulder blocks 22, 27 may be provided with sipes 30.

The sipes 30, usually provided in the axially innermost portion of the blocks 22 and 27, have a "hockey stick"-like course, with the handle of the stick arranged in the extension direction of the block.

In other words, the sipes 30 have two substantially straight sections connected so as to define between them an angle smaller than 180°, for example of about 130°-150°.

One of the two substantially straight sections has a greater extension, equal to about 2-3 times the extension of the other substantially straight section.

The sipes 30 may have a depth between 2 and 10 mm, for example equal to 3 mm, and a width smaller than 2 mm.

As mentioned above, the circumferential grooves 3, 3' separate the central portion L1 from the shoulder portions L2, respectively L3.

The central portion L1 is designed so as to have a high amount of rubber to the ground at most central portion near the equatorial plane X-X of the tyre 1. For this purpose, the central portion L1 has a void-to-rubber ratio lower than 0,25, for example equal to 0,2.

The central portion L1 has two rows 9, 10 of central circumferential blocks 32, 33.

The rows 9, 10 of central circumferential blocks 32, 33 are separated from each other by a circumferential groove 4 having a "saw-tooth" course.

The circumferential groove 4 is thus formed by a sequence of substantially transverse sections and a sequence of inclined sections. Each substantially transverse section preferably alternates with an inclined section.

Suitably, as shown in the embodiments of figures 1-3, all of the inclined sections of the groove 4 are inclined in the same direction.

The groove 4 is arranged at the equatorial plane X-X so that its substantially transverse sections cross such plane at a short distance from their intersection with the inclined sections.

The circumferential groove 4 preferably has a width greater than 5 mm.

Preferably, the circumferential groove 4 has in any case a width smaller than 15 mm, for example equal to 14 mm.

Advantageously, the circumferential groove 4 has a depth greater than 12 mm, preferably between 10 and 17 mm, for example equal to 15 mm.

In the embodiment of figures 2 and 2a, the row 9 of central blocks 32 is interposed between the circumferential groove 3 and the circumferential groove 4, while the row 10 of central blocks 33 is interposed between the groove 4 and the circumferential groove 3'.

Advantageously, in order to provide more strength, the blocks 32 of the row 9, as well as the blocks 33 of the row 10, may substantially be polygons, preferably convex polygons.

The central blocks 32, as well as the blocks 33, have at least partially a perimeter defined by a broken line, such as for example the one defined by a regular hexagon, as shown in figure 2.

Since the blocks 33 of the row 10 are totally similar, as to their shape and dimension, to the blocks 32 of the row 9 and are obtained by rotating by 180° such row, only the shape and arrangement of the central blocks 32 as shown in figures 1-3 shall be hereinafter described.

For this reason, in figures 2 and 2a the sides of the blocks 33 bear, apart from a prime, the same reference numeral as the corresponding sides of the blocks 32. Preferably, the central blocks 32 have an elongate shape and an extension direction inclined relative to the equatorial plane X-X.

Advantageously, the extension direction of each central block 32 defines an extension straight line r adapted to form an angle α1 between 45° and 80°, preferably between 47° and 60°, for example equal to 55°, to the equatorial plane X-X.

The central blocks 32 of the same row define extension straight lines parallel to one another and circumferentially spaced apart.

Preferably, also the central blocks 33 of the row 10 are arranged according to an extension direction defined for example, in the embodiment show in the figures, by an extension straight line r adapted to form an angle α1 between 45° and 80°, preferably between 47° and 60°, for example equal to 55°, to the equatorial plane X-X.

According to an advantageous aspect of the present invention each block 33 of the second row 10 and the block 32 preceding it in the circumferential direction have substantially the same extension direction defined by the common straight line r.

This means that each block 33 of the second row 10 substantially lies on the continuation of the extension straight line r defined by the circumferentially preceding block 32 of the first row. In other words, on the extension straight line r of the block 32 which, referring to figure 2 or 2a, lies in a "lower" position on the circumferential development.

In fact, the Applicant has found that such an inclination of the blocks forming the central portion L1 of the pattern, together with the arrangement of the rows of shoulder blocks 22, 27, allows notable improvements in contrasting the noise level of the pattern to be achieved, particularly as far as the noise generated during steering manoeuvring of tyres provided with such blocks is concerned.

Moreover, the irregular shape of the blocks 32 allows to visually recognize on the same an end portion 32a formed by three sides 34, 35, 36 and a vertex portion 32b, formed as well by three sides 38, 39, 40 arranged so as to taper the block 32, thus forming a vertex.

In the end portion 32a, shown in figure 2, two sides 34, 36 are oblique connection sides, and one side 35, facing the circumferential groove 3, is delimited by the two oblique connection sides 34, 36. Preferably, one of the two oblique connection sides 34, 36, indicated at 36, has a lesser extension and one, indicated at 34, is inclined relative to the equatorial plane X-X, thus forming an angle for example between 75° and 105°.

In the vertex portion 32b, shown in figure 2, there are two connection sides 38, 40, arranged substantially parallel to each other, and a head side 39 interposed between the other two and arranged substantially perpendicular to equatorial plane X-X.

Advantageously, the head side 39 of the vertex portion 32b is parallel to the oblique side 34 with lesser extension of the end portion 32a.

The circumferential groove 3 is thus inwardly axially delimited by sides 35, 36 and partially by side 40 of the central blocks 32.

In other words, the sequence in the circumferential direction of sides 35, 36 and 40 of the central blocks 32 at least partially defines the axially inner lateral wall of the groove 3.

Similarly, the circumferential groove 3' is inwardly axially delimited by sides 35', 36' and partially by side 40' of the central blocks 33.

In other words, the sequence in the circumferential direction of the sides 35', 36' and 40' of the central blocks 33 at least partially defines the axially inner lateral wall of the groove 3'.

Preferably, the central blocks 32 are separated from one another by transverse grooves 43.

This means that, because of what happens with reference to the central portion L1, the undulating path of the circumferential groove 3, respectively 3', is interrupted by the transverse grooves 43.

The row 10 of blocks, as previously mentioned, is interposed between the groove 4 and the circumferential groove 3'.

Also the central blocks 33 of the row 10 of blocks are separated from one another by the grooves 43.

According to an important aspect of the present invention, the transverse grooves 43 not only separate the central blocks 32, 33, but also completely cross the central portion L1 forming a transverse drainage channel 70, substantially continuous, which provides high traction and braking features.

As shown in figures 2 and 2a, preferably, at least one side 34 of the end portion 32a of each block 32 of the first row 9 is substantially aligned with at least one side 39' of the vertex portion 33b of a block 33 of the second row 10 for upwardly delimiting the transverse groove 43.

Similarly, at least one side 39 of the vertex portion 32b of each block 32 of the first central row 9 lies in a plane substantially perpendicular to the equatorial plane X-X and is substantially aligned with at least one side 34' of the end portion 33a of a block 33 of the second row 10 for downwardly delimiting the first transverse groove 43.

In other words, side 34 of the block 32 and side 39' of the axially aligned block 33 delimit the upper walls of the first drainage channel 70, while side 39 of the block 32 and side 34' of the block 33 delimit the lower walls of the first drainage channel 70, represented by the transverse groove 43.

Preferably, in the embodiment shown in figures 1-3, the upper and lower walls of the transverse groove 43 are interrupted by the circumferential grooves 3, 3', 4.

The transverse grooves 43, which substantially form the first drainage channel 70, preferably have a depth greater than 12 mm, preferably between about 10 and 17 mm, for example equal to 15 mm.

The transverse grooves 43, apart from the end sections, at which they terminate in the circumferential grooves 3, 3', may have a substantially constant width along their whole extension.

Preferably, the transverse grooves 43 may have a width greater than 6 mm, for example equal to about 9 mm.

The transverse grooves 43 extend from the groove 3 to the groove 3'.

The grooves 43 are not arranged in a position corresponding to the shoulder transverse grooves 23, instead they are circumferentially staggered relative to them.

In a similar way, in the preferred embodiment shown in figure 2, the transverse grooves 43 are neither circumferentially aligned with the transverse grooves 28 of the shoulder portion L3, instead they are circumferentially staggered relative to them.

The grooves 43 are preferably joined with the shoulder transverse grooves 23, 28 by means of sections of the circumferential groove 3 and of the circumferential groove 3', respectively.

According to an important aspect of the present invention, in the central portion L1 the blocks 32 and 33 are arranged so as to always form two drainage channel in the footprint area: a first transverse channel 70, substantially coinciding, as already mentioned, with the transverse groove 43, and a second oblique channel 71.

The formation of the substantially continuous second inclined drainage channel 71, which crosses the central portion L1, is obtained thanks to each block 33 of the second row 10 being aligned with the circumferentially preceding block 32 of the first row 9 according to a common extension straight line r.

The second inclined drainage channel 71 is thus preferably arranged substantially parallel to the common extension straight line r of the two blocks 32; 33.

The second drainage channel 71 is defined, as better shown in figures 2, 2a, between a first pair of blocks, formed by a block 33 of the second row 10 and the block 32 of the first row 9 preceding the same in the circumferential direction and aligned with the same according to the common extension straight line r, and a similarly formed and circumferentially adjacent second pair of blocks 32, 33.

Preferably, at least one side 38 of a block 32 of the first row 9 lies in a plane substantially parallel to the extension straight line r and is substantially aligned with at least one side 40' of a block 33 of the second row 10 for upwardly delimiting the second drainage channel 71.

Similarly, at least one side 40 of a block 32 of the first row 10 lies in a plane substantially parallel to the said common extension straight line and is substantially aligned with at least one side 38' of a block 33 of the second row 10 for downwardly delimiting the second drainage channel 71.

In other words, side 40 of block 32 and side 38' of block 33 aligned according to the common extension straight line r delimit the lower wall of the second drainage channel 71.

Similarly, side 38 of block 32 and side 40' of block 33, respectively circumferentially adjacent to those mentioned above, and aligned with each other according the common extension straight line r, delimit the upper wall of the drainage channel 71.

The lower and upper walls of the second drainage channel 71 are interrupted by substantially transverse sections of the circumferential groove 4.

Preferably, the second drainage channel 71 terminates into the circumferential groove 3' and is connected with a transverse groove 28 of the shoulder portion for providing a continuity of the drainage.

Advantageously, for the same purpose, the drainage channel 71 ends into the circumferential groove 3 and is connected with the transverse groove 23.

Notwithstanding the low void-to-rubber ratio in the central portion L1, and thus the large amount of rubber to the ground, the formation of the two above-mentioned drainage channels allows obstacles to the evacuation of water and/or mud between one shoulder and the other to be avoided, thus providing excellent drainage features particularly when driving off road.

At the same time, the void-to-rubber ratio which is low when referred to a tyre intended also for off-road use, allows excellent drivability, handling and mileage features to be combined on a tyre particularly designed also for use on-road.

As previously mentioned, for the purposes of the present invention the expression "substantially continuous" referred to the drainage channels may be interpreted as the condition in which, if the walls of two blocks defining the channel and substantially arranged side by side circumferentially are continued, the continuations lie within the channel itself or in any case at least one of such continuations, if not lying within the channel, at most runs into the wall of a circumferentially subsequent block. For the purposes of the present definition, abrupt reductions in the groove depth due to stiffening elements arranged between two adjacent blocks are not taken into account.

In other words, moving in the channel from one shoulder to the other and/or vice-versa, it is never found a wall of a block defining the channel arranged so as to completely obstruct the passage through the channel, thus trapping mud and/or water.

According to an advantageous embodiment, the blocks of the central rows may be provided with sipes 53. The sipes 53 of the central blocks 32, 33 have a "hockey stick"-like course, with the handle of the stick arranged in the extension direction of the block.

In other words, the sipes 53 have two substantially straight sections connected so as to define between them an angle smaller than 180°, for example of about 130°-150°.

One of the two substantially straight sections has a greater extension, equal to about 2-3 times the extension of the other substantially straight section.

Also the sipes 53, as the sipes 30 previously described, may have a depth between 2 and 10 mm, and a width smaller than 2 mm.

For providing the tyre 1 with greater structural strength and preventing an excessive mobility of the blocks, the blocks can be tied with one another by means of stiffening elements, i.e. by an amount of rubber which reduces the groove depth in a separation section between two adjacent blocks.

In the embodiment shown in figure 2a, stiffening element 133 is provided for this purpose between the blocks 32, 33 of the central rows 9 and 10, while stiffening element 134 is provided between the blocks 33 and the shoulder blocks 27.

Finally, still referring to the embodiment of figure 2a, stiffening element 135 is provided between the blocks 32 of the row 9 and the shoulder blocks 22.

A sample of the tyre of the invention having the tread 2 of Figs 1-2 was made and tested in comparison with a tyre available on the market having a tread with four rows of blocks, two central rows and two shoulder rows, and known to the users for the excellent off-road behavioural features , both on wet and dry grounds, and homologated motor vehicles with large engine capacity.

Both tyres had size 265/76 R15, with rim 8J16" and an inflation pressure of 2,3 bar.

A Mitsubishi L 200 motor vehicle was initially equipped with four tyres of the invention and then with four comparison tyres.

Tests of the running behaviour, both on road terrains, with dry and wet ground, and on off-road terrains, particularly muddy, sandy terrains and terrains with gravel and cobblestones, as well as of the comfort and of the noise inside and outside the motor vehicle were performed.

The running behaviour test on road terrains, with dry and wet ground, is performed on predetermined paths, typically tracks closed to traffic. By simulating some characteristic manoeuvring (such as change of lane, overtaking, slalom between traffic cones, entering and leaving a bend) at a constant speed, as well as during acceleration and deceleration, the test driver evaluates the performances of the tyre by giving a score to the behaviour of the latter during the aforementioned manoeuvring.

Also the running behaviour tests on off-roads terrains are performed on predetermined paths, closed to traffic, which comprise different kinds of terrains (i.e. mud, sand, cobblestones, etc.).

Also in this case the test driver, performing some characteristic manoeuvring on the different kinds of terrains, evaluates, by giving a score, the traction, manoeuvrability, controllability, and rear axle directionality of the tyre during the test.

Moreover, two different kinds of noise tests outside the vehicle were performed, one with instruments and the other subjective.

The noise test with instruments outside the vehicle is performed on a straight stretch of an asphalted path provided with microphones. According to the test, the motor vehicle enters the path stretch at a predetermined speed, then the engine is turned off and the noise outside the vehicle is measured, with idle engine until the vehicle stops.

The subjective noise test outside the vehicle is performed on the same kind of path and following the same procedure, but in this case the evaluation is performed only by the test driver.

The test results are reproduced in Table 1, where the score values are expressed in percentage, setting to 100 the values referred to the comparison tyre. The evaluation scale represents a subjective evaluation made by the test driver which tests the equipments one after the other.

**Table I**

| | Comparison | Invention |
|---|---|---|
| Dry | 100 | 120 |
| Wet | 100 | 150 |
| Mud | 100 | 120 |
| Gravel and cobblestones | 100 | 97 |
| Comfort | 100 | 110 |
| Noise | 100 | 110 |
| Sand | 100 | 102 |

In Table I, values higher than 100 indicate an improvement with respect to the reference tyre.

The test results demonstrate that the tyre of the invention has globally a better behaviour compared to the reference tyre.

## Claims

1. Tyre (1) having a tread (2) comprising a central portion (L1) astride an equatorial plane (X-X) and two shoulder portions (L2,L3), wherein:
the shoulder portions (L1; L2) each have at least one row of lateral blocks (13;14);
the central portion (L1) comprises a first and a second row (9;10) of central blocks having an elongate shape;
each block (32) of the first central row (9) is substantially arranged axially side by side with a block (33) of the second row such as to define a first substantially transverse drainage channel (70),
substantially continuous, which crosses the central portion (L1);
said first substantially transverse drainage channel (70) is defined between a first pair of blocks, formed by a block (32) of the first row (9) and a block (33) of the second row (10) arranged axially side by side, and the first circumferentially adjacent pair of blocks, formed in a similar way;
each block (32) of the first row (9) is arranged according to an extension direction;
each block (33) of the second row (10) extends according to an extension direction substantially aligned with the extension direction of the circumferentially preceding block (32) of the first row (9) such as to define an inclined and
substantially continuous second drainage channel (71) which crosses the central portion (L1);
said second drainage channel (71) being defined between a second pair of blocks, formed by a block (33) of the second row (10) and the block (32) of the first row (9) which precedes the former in circumferential direction and is aligned thereto according to the substantially common extension direction, and the circumferentially adjacent second pair of blocks formed in a similar way;
the tyre being charcterized in that:
the central portion (L1) has a void-to-rubber ratio lower than 0,25;
at least one side (40) of a block (32) of the first row (9) lies in a plane substantially parallel to said common extension direction and is substantially aligned with at least another side (38') of a block (33) of the second row (10) for downwardly delimiting the second drainage channel (71).

2. Tyre according to claim 1, **characterized in that** each block of the central portion (L1) extends according to an extension direction adapted to form an angle α1 between 45° and 80° to the equatorial plane X-X.

3. Tyre according to claim 1, **characterized in that** the blocks (32;33) of the central rows (9;10) comprise substantially convex polygons.

4. Tyre according to claim 3, **characterized in that** each block has six sides.

5. Tyre according to anyone of the previous claims, **characterized in that** the blocks (32;33) of the central rows (9;10) have substantially the same shape and dimension.

6. Tyre according to anyone of the previous claims, **characterized in that** the blocks (32;33) of the central rows (9;10) have at least one portion tapered such as to form a vertex.

7. Tyre according to claim 6, **characterized in that** the blocks (32) of the first row (9) are oriented with a vertex pointing in opposite direction relative to the vertex of the blocks (33) of the second row (10).

8. Tyre according to anyone of the previous claims 4 to 7, **characterized in that** at least one first side (34) of a block (32) of the first central row (9) lies in a plane substantially perpendicular to the equatorial plane (X-X) and is substantially axially aligned with at least one second side (39') of a block of the second central row (10) for upwardly delimiting the first transverse channel (70).

9. Tyre according to anyone of the previous claims 4 to 8, **characterized in that** at least one second side (39) of a block (32) of the first central row (9) lies in a plane substantially perpendicular to the equatorial plane (X-X) and is substantially axially aligned with at least a first side (34') of a block of the second central row (10) for downwardly delimiting the first transverse channel (70).

10. Tyre according to anyone of the previous claims 1 to 9, **characterized in that** at least one side (38) of a block (32) of the first row (9) lies in a plane substantially parallel to the said common extension direction and is substantially aligned with at least one side (40') of a block (33) of the second row (9) for upwardly delimiting the second drainage channel (71).

11. Tyre according to anyone of the previous claims, **characterized in that** the blocks of the shoulder portions (L1;L2) are circumferentially separated by shoulder transverse grooves (23;28).

12. Tyre according to anyone of the previous claims, **characterized by** comprising two circumferential grooves (3;3') for separating the said central portion L1 from the shoulder portions L2;L3.

13. Tyre according to anyone of the previous claims, **characterized in that** the circumferential grooves (3,3') have an undulating course.

14. Tyre according to claim 12 or 13, **characterized in that** the path of the grooves (3;3') is interrupted at least by the shoulder transverse grooves (23;28).

15. Tyre according to anyone of the previous claims, **characterized in that** the rows (9,10) of circumferential central blocks (32,33) are separated from each other by a further circumferential groove (4).

16. Tyre according to claim 15, **characterized in that** the further circumferential groove (4) has a saw-tooth course.

## Patentansprüche

1. Reifen (1) mit einer Lauffläche (2) umfassend einen zentralen Abschnitt (L1) zu beiden Seiten einer Äquatorialebene (X-X) sowie zwei Schulterabschnitte (L2, L3), wobei:
die Schulterabschnitte (L1, L2) jeweils zumindest eine Reihe von seitlichen Blöcken (13; 14) aufweisen;
wobei der zentrale Abschnitt eine erste und eine zweite Reihe (9; 10) von zentralen Blöcken mit einer länglichen Gestalt umfasst;
wobei jeder Block (32) der ersten zentralen Reihe (9) im Wesentlichen axial Seite an Seite mit einem Block (33) der zweiten Reihe angeordnet ist, um so einen ersten, im Wesentlichen querverlaufenden, im Wesentlichen durchgehenden Ablaufkanal (70) zu definieren, der den zentralen Abschnitt (L1) kreuzt;
wobei der erste, im Wesentlichen querverlaufende Ablaufkanal (70) zwischen einem ersten Paar von Blöcken, der durch einen Block (32) der ersten Reihe (9) und einen Block (33) der zweiten Reihe (10) gebildet wird, die axial Seite an Seite angeordnet sind, und das erste in der Umlaufrichtung benachbarte Paar von Blöcken definiert wird, das auf ähnliche Weise gebildet wird;
wobei jeder Block (32) der ersten Reihe (9) entsprechend einer Erstreckungsrichtung angeordnet ist;
wobei jeder Block (33) der zweiten Reihe (10) sich entsprechend einer Erstreckungsrichtung erstreckt, die im Wesentlichen mit der Erstreckungsrichtung des in Umfangsrichtung vorhergehenden Blocks (32) der ersten Reihe (9) ausgerichtet ist, um so einen schrägen und im Wesentlichen durchgehenden zweiten Ablaufkanal (71) zu definieren, der den zentralen Abschnitt (L1) kreuzt;
wobei der zweite Ablaufkanal (71) zwischen einem zweiten Paar von Blöcken, der durch einen Block (33) der zweiten Reihe (10) und den Block (32) der ersten Reihe (9) ausgebildet wird, der dem ersten in Umfangsrichtung vorausgeht und damit entsprechend der Wesentlichen gemeinsamen Erstreckungsrichtung ausgerichtet ist, und dem in Umfangrichtung benachbarten zweiten Paar von Blöcken definiert wird,
das auf ähnliche Weise ausgebildet ist;
wobei der Reifen **dadurch gekennzeichnet ist, dass**:
der zentrale Abschnitt (L1) ein Gesamtverhältnis der negativen und positiven Profilanteile niedriger als 0,25 aufweist;
zumindest eine Seite (40) eines Blocks (32) der ersten Reihe (9) in einer Ebene liegt, die im Wesentlichen parallel zu der gemeinsamen Erstreckungsrichtung und im Wesentlichen mit zumindest einer weiteren Seite (38') eines Blocks (33) der zweiten Reihe (10) ausgerichtet ist, um den zweiten Ablaufkanal (71) nach unten zu begrenzen.

2. Reifen nach Anspruch 1, **dadurch gekennzeichnet, dass** jeder Block des zentralen Abschnitts (L1) sich entsprechend einer Erstreckungsrichtung erstreckt, die dazu geeignet ist, einen Winkel α1 von zwischen 45° und 80° mit der Äquatorialebene X-X zu bilden.

3. Reifen nach Anspruch 1, **dadurch gekennzeichnet, dass** die Blöcke (32; 33) der zentralen Reihen (9; 10) im Wesentlichen konvexe Vielecke umfassen.

4. Reifen nach Anspruch 3, **dadurch gekennzeichnet, dass** jeder Block sechs Seiten aufweist.

5. Reifen nach einem der vorhergehenden Ansprüche, **dadurch gekennzeichnet, dass** die Blöcke (32; 33) der zentralen Reihen (9; 10) im Wesentlichen dieselbe Gestalt und Dimension aufweisen.

6. Reifen nach einem der vorhergehenden Ansprüche, **dadurch gekennzeichnet, dass** die Blöcke (32; 33) der zentralen Reihen (9; 10) zumindest einen Abschnitt aufweisen, der verjüngt ist, um einen Scheitelpunkt zu bilden.

7. Reifen nach Anspruch 6, **dadurch gekennzeichnet, dass** die Blöcke (32) der ersten Reihe (9) so orientiert sind, dass ein Scheitelpunkt in die in Bezug auf den Scheitelpunkt der Blöcke (33) der zweiten Reihe (10) entgegengesetzte Richtung weist.

8. Reifen nach einem der vorhergehenden Ansprüche 4 bis 7, **dadurch gekennzeichnet, dass** zumindest eine erste Seite (34) eines Blocks (32) der ersten zentralen Reihe (9) in einer Ebene liegt, die im Wesentlichen senkrecht auf die Äquatorialebene (X-X) steht, und im Wesentlichen axial mit zumindest einer zweite Seite (39') eines Blocks der zweiten zentralen Reihe (10) ausgerichtet ist, um den ersten querverlaufenden Kanal (70) nach oben zu begrenzen.

9. Reifen nach einem der vorhergehenden Ansprüche 4 bis 8, **dadurch gekennzeichnet, dass** zumindest eine zweite Seite (39) eines Block (32) der ersten zentralen Reihe (9) in einer Ebene im Wesentlichen senkrecht auf die Äquatorialebene (X-X) liegt und im Wesentlichen axial mit zumindest einer ersten Seite (34') eines Blocks der zweiten zentralen Reihe (10) ausgerichtet ist, um den ersten querverlaufenden Kanal (70) nach unten zu begrenzen.

10. Reifen nach einem der vorhergehenden Ansprüche 1 bis 9, **dadurch gekennzeichnet, dass** zumindest eine erste Seite (38) eines Blocks (32) der ersten Reihe (9) in einer Ebene liegt, die im Wesentlichen senkrecht auf die gemeinsame Erstreckungsrichtung steht, und im Wesentlichen mit zumindest einer Seite (40') eines Blocks (33) der zweiten zentralen Reihe (W) ausgerichtet ist, um den zweiten Ablaufkanal (71) nach oben zu begrenzen.

11. Reifen nach einem der vorhergehenden Ansprüche, **dadurch gekennzeichnet, dass** die Blöcke der Schulterabschnitte (L1; L2) in Umfangsrichtung durch querverlaufende Schulternuten (23; 28) getrennt werden.

12. Reifen nach einem der vorhergehenden Ansprüche, **gekennzeichnet durch** zwei umlaufende Nuten (3; 3') zum Trennen des zentralen Abschnitts L1 von den Schulterabschnitten L2; L3.

13. Reifen nach einem der vorhergehenden Ansprüche, **dadurch gekennzeichnet, dass** die umlaufenden Nuten (3, 3') einen wellenförmigen Verlauf haben.

14. Reifen nach Anspruch 12 oder 13, **dadurch gekennzeichnet, dass** der Pfad der Nuten (3; 3') durch die querverlaufenden Schulternuten (23; 28) unterbrochen wird.

15. Reifen nach einem der vorhergehenden Ansprüche, **dadurch gekennzeichnet, dass** die Reihen (9, 10) von umlaufenden zentralen Blöcke (32,33) voneinander durch eine weitere umlaufende Nut (4) getrennt werden.

16. Reifen nach Anspruch 15, **dadurch gekennzeichnet, dass** die weitere umlaufende Nut (4) einen sägezahnförmigen Verlauf hat.

## Revendications

1. Pneu (1) ayant une bande de roulement (2) comprenant une partie centrale (L1) à cheval sur un plan équatorial (X-X) et deux parties d'épaulement (L2, L3), où :
les parties d'épaulement (L1 ; L2) ont chacune au moins une rangée de blocs latéraux (13 ; 14) ;
la partie centrale (L1) comprend des première et deuxième rangées (9 ; 10) de blocs centraux ayant une forme allongée ;
chaque bloc (32) de la première rangée centrale (9) est essentiellement agencée axialement côte à côte avec un bloc (33) de la deuxième rangée de manière à définir un premier canal de drainage essentiellement transversal (70), essentiellement continu, qui traverse la partie centrale (L1) ;
ledit premier canal de drainage essentiellement transversal (70) est défini entre une première paire de blocs, formée par un bloc (32) de la première rangée (9) et par un bloc (33) de la deuxième rangée (10) agencés axialement côte à côte, et la première paire de blocs circonférentiellement adjacente, formée de manière similaire ;
chaque bloc (32) de la première rangée (9) est agencé selon une direction d'extension ;
chaque bloc (33) de la deuxième rangée (10) s'étend selon une direction d'extension essentiellement alignée avec la direction d'extension du bloc circonférentiellement précédent (32) de la première rangée (9) de manière à définir un deuxième canal de drainage incliné et essentiellement continu (71) qui traverse la partie centrale (L1) ;
ledit deuxième canal de drainage (71) étant défini entre une deuxième paire de blocs, formée par un bloc (33) de la deuxième rangée (10) et par le bloc (32) de la première rangée (9) qui précède le premier bloc dans la direction circonférentielle et qui est aligné avec celui-ci selon la direction d'extension essentiellement commune, et la deuxième paire de blocs circonférentiellement adjacente formée de manière similaire ;
le pneu étant **caractérisé en ce que** :
la partie centrale (L1) a un rapport vide sur caoutchouc inférieur à 0,25 ;
au moins un côté (40) d'un bloc (32) de la première rangée (9) se trouve dans un plan essentiellement parallèle à ladite direction d'extension commune et est essentiellement aligné avec au moins un autre côté (38') d'un bloc (33) de la deuxième rangée (10) pour délimiter le deuxième canal de drainage (71) vers le bas.

2. Pneu selon la revendication 1, **caractérisé en ce que** chaque bloc de la partie centrale (L1) s'étend selon une direction d'extension adaptée pour former un angle α1 entre 45° et 80° par rapport au plan équatorial X-X.

3. Pneu selon la revendication 1, **caractérisé en ce que** les blocs (32 ; 33) des rangées centrales (9 ; 10) comprennent des polygones essentiellement convexes.

4. Pneu selon la revendication 3, **caractérisé en ce que** chaque bloc a six côtés.

5. Pneu selon l'une quelconque des revendications précédentes, **caractérisé en ce que** les blocs (32 ; 33) des rangées centrales (9 ; 10) ont essentiellement les mêmes forme et dimension.

6. Pneu selon l'une quelconque des revendications précédentes, **caractérisé en ce que** les blocs (32 ; 33) des rangées centrales (9 ; 10) ont au moins une partie effilée de manière à former un sommet.

7. Pneu selon la revendication 6, **caractérisé en ce que** les blocs (32) de la première rangée (9) sont orientés avec un sommet pointant dans une direction opposée par rapport au sommet des blocs (33) de la deuxième rangée (10).

8. Pneu selon l'une quelconque des revendications précédentes 4 à 7, **caractérisé en ce qu'**au moins un premier côté (34) d'un bloc (32) de la première rangée centrale (9) se trouve dans un plan essentiellement perpendiculaire au plan équatorial (X-X) et est aligné de manière essentiellement axiale avec au moins un deuxième côté (39') d'un bloc de la deuxième rangée centrale (10) pour délimiter le premier canal transversal (70) vers le haut.

9. Pneu selon l'une quelconque des revendications précédentes 4 à 8, **caractérisé en ce qu'**au moins un deuxième côté (39) d'un bloc (32) de la première rangée centrale (9) se trouve dans un plan essentiellement perpendiculaire au plan équatorial (X-X) et est aligné de manière essentiellement axiale avec au moins un premier côté (34') d'un bloc de la deuxième rangée centrale (10) pour délimiter le premier canal transversal (70) vers le bas.

10. Pneu selon l'une quelconque des revendications précédentes 1 à 9, **caractérisé en ce qu'**au moins un côté (38) d'un bloc (32) de la première rangée (9) se trouve dans un plan essentiellement parallèle à ladite direction d'extension commune et est essentiellement aligné avec au moins un côté (40') d'un bloc (33) de la deuxième rangée (9) pour délimiter le deuxième canal de drainage (71) vers le haut.

11. Pneu selon l'une quelconque des revendications précédentes, **caractérisé en ce que** les blocs des parties d'épaulement (L1 ; L2) sont circonférentiellement séparés par des rainures transversales d'épaulement (23 ; 28).

12. Pneu selon l'une quelconque des revendications précédentes, **caractérisée en ce qu'**il comprend deux rainures circonférentielles (3 ; 3') pour séparer ladite partie centrale L1 des parties d'épaulement L2 ; L3.

13. Pneu selon l'une quelconque des revendications précédentes, **caractérisé en ce que** les rainures circonférentielles (3, 3') ont une configuration de forme ondulée.

14. Pneu selon la revendication 12 ou 13, **caractérisé en ce que** le chemin des rainures (3 ; 3') est interrompu au moins par les rainures transversales d'épaulement (23 ; 28).

15. Pneu selon l'une quelconque des revendications précédentes, **caractérisé en ce que** les rangées (9, 10) de blocs centraux circonférentiels (32, 33) sont séparées l'une de l'autre par une rainure circonférentielle supplémentaire (4).

16. Pneu selon la revendication 15, **caractérisé en ce que** la rainure circonférentielle supplémentaire (4) a une configuration en dents de scie.
